(19) **Europäisches Patentamt**

**European Patent Office**

**Office européen des brevets**

(11) **EP 0 882 606 B1**

(12) **EUROPEAN PATENT SPECIFICATION**

(45) Date of publication and mention
of the grant of the patent:
**18.08.2004   Bulletin 2004/34**

(51) Int Cl.⁷: **B60C 11/12**, B60C 11/00,
B60C 11/13, B60C 1/00

(21) Application number: **98304344.9**

(22) Date of filing: **02.06.1998**

(54) **Pneumatic tyre**

Luftreifen

Bandage pneumatique

(84) Designated Contracting States:
**DE FI FR GB SE**

(30) Priority:  **02.06.1997   JP 14437297**

(43) Date of publication of application:
**09.12.1998   Bulletin 1998/50**

(73) Proprietor: **Bridgestone Corporation
Tokyo 104-8340 (JP)**

(72) Inventors:
• **Shinohara, Kazunori
Kodaira-shi, Tokyo (JP)**

• **Nishikawa, Hiroaki
Chuo-ku, Tokyo (JP)**
• **Yamaguchi, Koujiro
Chuo-ku, Tokyo (JP)**

(74) Representative: **Whalley, Kevin
MARKS & CLERK,
57-60 Lincoln's Inn Fields
London WC2A 3LS (GB)**

(56) References cited:
**EP-A- 0 734 886         EP-A- 0 826 522
CH-A- 647 461             DE-A- 4 037 714
FR-A- 1 506 219           US-A- 2 960 138**

**Description**

The present invention relates to a pneumatic tire which can exhibit an efficient water removal effect without being affected by the running conditions or by the state of wear.

It has been understood that in order to improve the running performance of a tire on a slick road surface, which has become a problem in recent years, and on an icy or snowy road surface on which a water film is apt to be produced, it is effective if the friction coefficient ($\mu$) on the road surface is improved by removing the water film.

It has also been understood that in order to remove a water film, it is effective to form, in a pattern tread having sipes which exhibit a water removal effect in the land portions of the road contacting surface of a tire, a tread rubber (1) which exhibits a water removal effect through a large number of very small concave portions formed by spherical closed cells (see Japanese Patent Application Laid-Open (JP-A) No. 62-283001) or a tread rubber (2) which exhibits a water removing effect through a large number of very small concave portions formed by foaming and short fibers (see Japanese Patent Application Laid-Open (JP-A) No. 4-110212).

Further, in order to improve the friction coefficient ($\mu$) of a brand-new tire with no cells appearing thereon, it has been understood that a large number of very small narrow grooves may be provided on the road contacting surface of a land portion (see Japanese Patent Application Laid-Open (JP-A) No. 7-186633).

However, the above-described conventional methods have the following drawbacks.

In the case of a foamed rubber formed only by closed cells (see the above tread rubber (1)), a sufficient water removing effect cannot be obtained and no great improvement of the tire performance on icy and snowy roads can be achieved.

In the case of rubber having a combination of foaming with short fibers (see the above tread rubber (2)), the formation of a water discharge passage depends on the abrasion or falling-off of short fibers. For this reason, the running conditions or state of wear of the tires create huge differences and abrasion resistance is also deteriorated.

Further, in the case of the tire in which a large number of very small narrow grooves are provided on the road contacting surface of a land portion, when the tire is worn and the narrow grooves have thereby disappeared, no elongated water discharge passage exists, resulting in efficient water removal becoming impossible.

Patent application EP 0 826 522, a prior art document according to Art. 54(3) EPC, discloses a pneumatic tire in which a plurality of grooves defining a plurality of land portions are formed in a tread road-contacting surface, and a plurality of sipes extending inward in the radial direction of the tire are formed in the land portions, wherein a total negative ratio N of the road-contacting surface is set in a range from 25% to 65%, a depth D of each of the grooves is set at 5mm or more, a depth Sd of each of the sipes is given by D $\times$ $\alpha$ (0.1 < $\alpha$ < 1.0), and a tread rubber includes a large number of elongated closed cells each covered by a protective layer made from resin.

In view of the above-described circumstances, it is an object of the present invention to provide a pneumatic tire which can exhibit an efficient water removing effect without being influenced by the running conditions or the state of wear of the tire.

In accordance with the present invention, there is provided a pneumatic tire in which a plurality of grooves defining a plurality of land portions are formed in a tread road-contacting surface, and a plurality of sipes extending inward in the radial direction of the tire are formed in the land portions; wherein a total negative ratio N of the road-contacting surface is set in a range from 25% to 65%, a depth D of each of the grooves is set at 5mm or more, a depth Sd of each of the sipes is given by D $\times$ $\alpha$ (0.1 < $\alpha$ < 1.0), and a tread rubber includes a large number of elongated closed cells each covered by a protective layer made from resin; and wherein the traction edge component density E of the road contacting surface of the land portion of the tread is in a range of 0.1 to 0.3.

Next, operation of the pneumatic tire according to the present invention will be described.

The above-described pneumatic tire includes a plurality of land portions formed in the tread road-contact surface portion by a plurality of grooves each having a depth D of 5mm or more. These land portions bite into a snow-covered surface, and therefore, a high tire performance on snow can be obtained. However, when the depth D is less than 5mm, a sufficient tire performance on snow cannot be obtained.

Further, the plurality of sipes formed in the land portions allow removal of the water film between the tire and the snowy or icy road surface and the edges of the sipes allow the water film to be cut. Accordingly, the road contact improves.

On the other hand, in order to improve the running performance on snowy and icy road surfaces which have a low friction coefficient ($\mu$) and where a water film is apt to be generated, it is necessary to efficiently remove the water film generated on the road contacting surface of the tire.

In the pneumatic tire according to the invention, the elongated closed cells serving as the water discharge passage are normally present in the tread rubber. Accordingly, elongated concave portions are successively formed up to the last stages of wear, and the water removal and discharge effect can be constantly obtained without being influenced by the state of wear.

The elongated closed cells are each reinforced by being covered with a protective layer made of resin, and the tire performance on ice and snow can be improved without wear resistance and biased wear characteristics being deteriorated.

Additionally, the protective layer made from resin prevents crushing of the elongated closed cells, and therefore the water discharge and removal effect can be maintained even under application of a heavy load.

When the total negative ratio N of the road-contacting surface portion is less than 25%, a water removing effect on a wet road surface and an ability to run on a road surface covered with snow cannot be obtained.

On the other hand, when the total negative ratio N of the road-contacting surface portion exceeds 65%, the road contacting surface area of the tire becomes extremely small. For this reason, the force with which the tire grips the road surface decreases and maneuverability is lost.

The total negative ratio N of the road-contacting surface is preferably set in the range from 28% to 45%.

Further, when the depth Sd of the sipe is less than 0.1D, the volume of the sipe is not sufficient to remove a water film and a water removal effect cannot be exhibited.

When the depth Sd of the sipe exceeds 1.0D, the rigidity of the tread land portion sharply decreases and the land portion falls flat when a load is applied thereto. For this reason, the road-contacting surface area of the tire markedly decreases and any improved performance effect is lost.

It is more preferable that $0.5 < \alpha < 1.0$.

The invention will be further described with reference to the accompanying drawings, in which:

Fig. 1 is a cross-sectional view of a pneumatic tire according to an embodiment to which the present invention is applied;

Fig. 2 is a plan view of a tread of the pneumatic tire according to the embodiment of the present invention;

Fig. 3 is an enlarged cross-sectional view of the tread along a sipe;

Fig. 4 is an enlarged plan view of the tread;

Fig. 5 is an enlarged cross-sectional view of the tread;

Fig. 6 is an enlarged cross-sectional view of an outer rubber layer;

Fig. 7 is a perspective view of an elongated resin;

Fig. 8 is an explanatory diagram which illustrates the principle of aligning the directions of the elongated resins;

Figs. 9A to 9D are diagrams which illustrate a process in which an elongated closed cell is formed;

Fig. 10 is a graph which shows the relation between temperature (vulcanizing time) and the viscosities of rubber and resin; and

Fig. 11 is an enlarged cross-sectional view of a worn outer rubber layer.

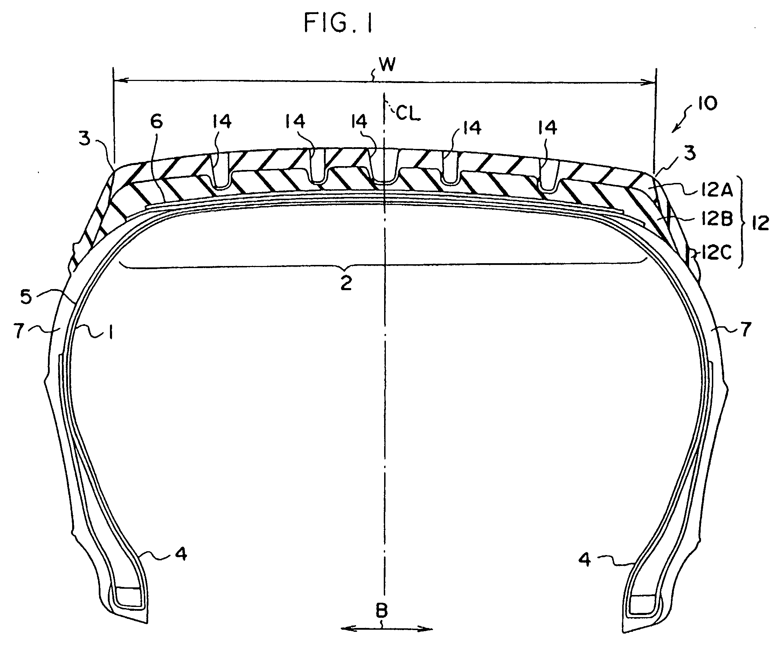

First, a description of a pneumatic tire according to an embodiment of the present invention will be given with reference to Figs. 1 to 11.

As shown in Fig. 1, a pneumatic tire 10 (size: 185/70R14) of the present embodiment has a case 1 and a tread 12 which covers the outer side of a crown 2 of the case 1 in the radial direction of the tire between shoulders 3.

The case 1 has a pair of beads 4, a toroidal carcass 5 formed from a rubber coated cord extending from one bead 4 to the other bead 4, and a known inextensible belt 6 disposed at the outer side of the carcass 5 in the radial direction of the tire across the region of the crown 2 and extending in the circumferential direction of the tire. Further, a side wall 7 formed from ordinary rubber having excellent elasticity is disposed at the outer side of the case 1 in the axial direction of the tire.

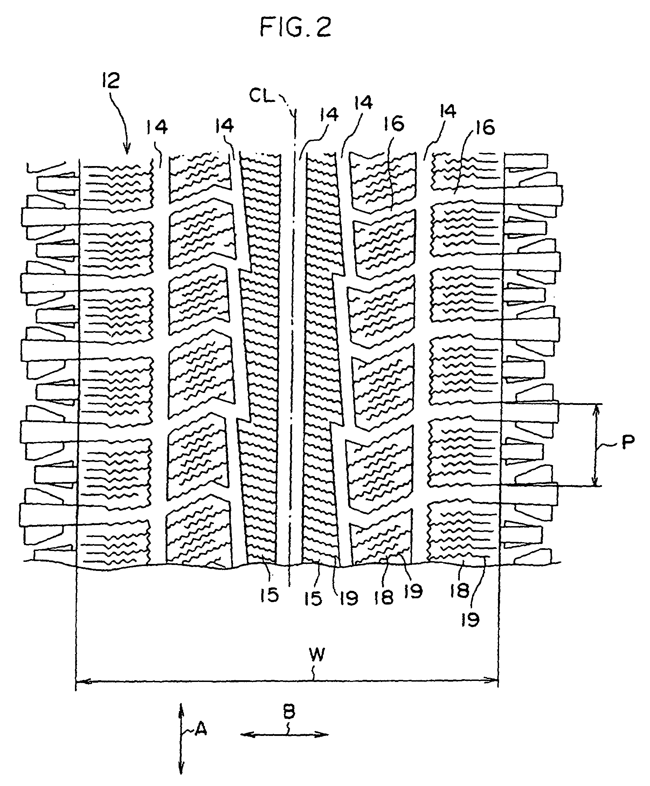

The pneumatic tire 10 according to the present embodiment is a tire for winter use (a so-called studless tire). As shown in Fig. 2, the tread 12 has five circumferential grooves 14 formed thereon, and two ribs 15 formed on both sides of the equatorial plane CL of the tire between a circumferential groove 14 formed on the equatorial plane CL of the tire and circumferential grooves 14 formed on both sides of the above-described circumferential groove 14 and extending along the circumferential direction of the tire.

Further, transverse grooves 16 are formed on both sides of the ribs 15 extending in the transverse direction of the tire (i.e., the direction indicated by arrow B) and a plurality of blocks 18 are thereby formed between the transverse grooves 16 and the circumferential grooves 14.

A plurality of sipes 19 is formed in each of the ribs 15 and the blocks 18 in such a manner as to extend substantially in the transverse direction of the tire.

The pneumatic tire to which the present invention is applied preferably has a cap/base structure. As shown in Fig. 1, the tread 12 of the present embodiment has a tread road-contacting surface comprised of two rubber layers, i.e., an outer rubber layer (a so-called cap rubber layer) 12A positioned at the outer side in the radial direction of the tire so as to contact a road surface and an inner rubber layer (a so-called base rubber layer) 12B positioned at the inner side in the radial direction of the tire. The tread 12 also has side rubber portions 12C disposed at both sides of the tread road-contacting surface in the transverse direction of the tire.

A negative ratio N of the tread road-contacting surface of the pneumatic tire 10 according to the present embodiment is 33% (0.33).

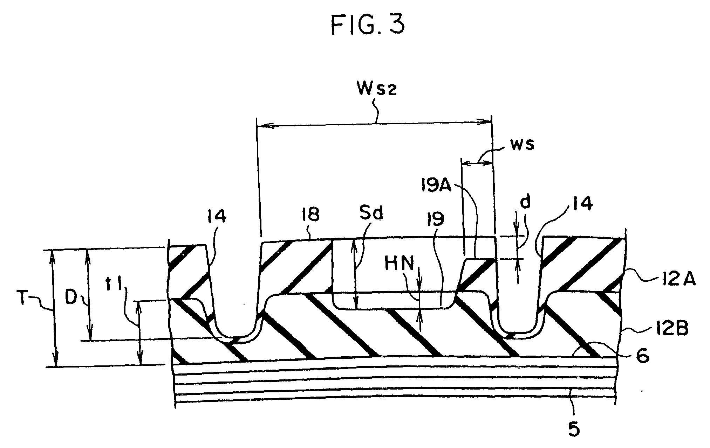

The depth D of each of the circumferential grooves 14 and the transverse grooves 16 is 9.3mm (see Fig. 3).

The traction edge component density E of the road contacting surface of the land portion of the tread is in a range from 0.1 to 0.3, and preferably from 0.17 to 0.27. In the present embodiment, the average value of the traction edge component density E of the road contacting surface of the land portion of a tread is 0.24. Here, E = e/((1- N)·W), wherein e indicates a value given by dividing the total of the sum of the edge components in the transverse direction of the tire of the road contacting surface of the land portions (the ribs 15 and the blocks 18) within one pattern pitch P and the sum of the components in the transverse direction of the sipes 19 provided on the road contacting surface of the land portions by the length of one pattern pitch P (refer to Fig. 2), and W indicates the width of the tread which contacts a road surface, which is an applicable size in 1997JATMA and is set under the conditions of the application of a load of 85% of the maximum load capacity in the ply rating and the tire being filled to an internal pressure of 75% of the maximum air pressure corresponding to the maximum load capacity.

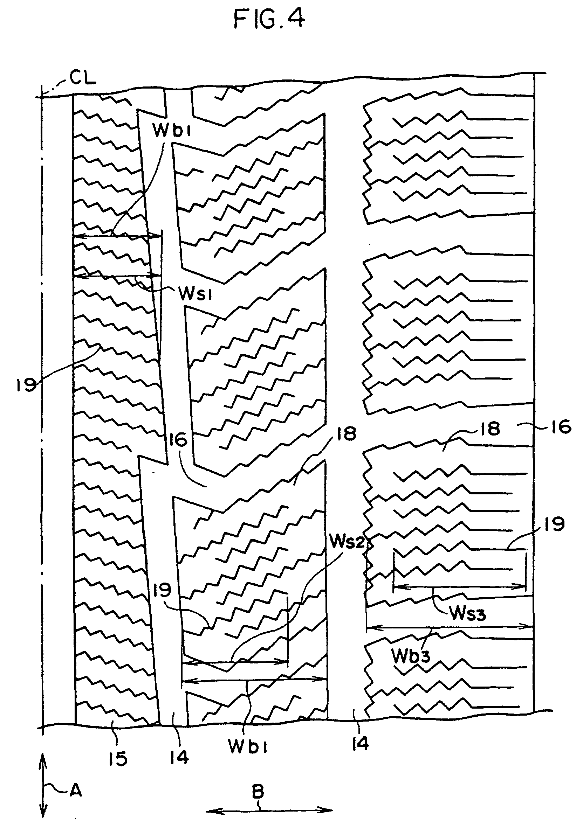

The ratio between the width Wb of a land portion and the total width Ws of the sipe provided within the land portion, i.e., Ws/Wb, is preferably set in the range from 0.6 to 1.0. In the present embodiment, provided that, as shown in Fig. 4, the width of the rib 15 is Wb1, the total width of the sipes 19 formed in the rib 15 is Ws1, the total width of the block 18 adjacent to the rib 15 is Wb2, the total width of the sipe 19 formed in the block 18 adjacent to the rib 15 is Ws2, the total width of the block 18 at the side of the shoulder is Wb3, and the total width of the sipes 19 formed in the block 18 at the side of the shoulder is Ws3, the following ratios are given: Ws1/Wb1 = 1.0; Ws2/Wb2 = 0.7; and Ws3/Wb3 = 0.76.

The hardness of the outer rubber layer 12A is preferably lower than that of the inner rubber layer 12B. It is preferable that JIS rubber hardness (0°C) of the outer rubber layer 12A is set in the range from 40 to 60 degrees and the JIS rubber hardness (0°C) of the inner rubber layer 12B is set in the range from 55 to 70 degrees. The thickness t1 (see Fig. 3) of the inner rubber layer 12B is preferably set so that $0.3 < t1/T < 0.6$ (T indicates the total thickness of the tread).

In the present embodiment, ordinary non-foamed rubber is used as the inner rubber layer 12B and the JIS rubber hardness (0°C) of the outer rubber layer 12A and the inner rubber layer 12B are set at 48 degrees and 62 degrees, respectively.

As shown in Fig. 3, the thickness t1 of the inner rubber layer 12B is 6.3mm (t1 = T × 0.55 : the total thickness of the tread = 11.5mm).

Further, a portion of the sipe 19, particularly the end portion which opens onto the groove, is preferably made shallow. In the present embodiment, the sipes 19 formed in the block 18 adjacent to the rib 15 are connected to the circumferential groove 14 only at one end thereof and the end portions of the sipes 19 are formed as shallow sipe portions 19A. Here, if the depth of the shallow sipe portions 19A is indicated by d and the width of the shallow sipe portions 19A is indicated by ws, then it is preferable that d = Sd × β (wherein, $0.15 < β < 0.45$) and ws = Ws < γ (wherein, $0 < γ < 0.6$).

Moreover, the sipes 19 are preferably cut in the inner rubber layer 12B and the depth of the cut HN of the sipes 19 in the inner rubber layer 12B is preferably set so that $0.08 < HN/Sd < 0.7$ (Sd indicates the maximum depth of the sipes).

In the present embodiment, the depth Sd of the sipes 19 is 6.9mm (= D × 0.74), the depth d of the shallow sipe portions 19A is 2mm (Sd × 0.22), the width ws of the shallow sipe portions 19A is 2mm (ws = WS2 × 0.4 to 0.06), and the depth of the cut HN in the inner rubber layer 12B is 1.7mm (HN/Sd = 0.24).

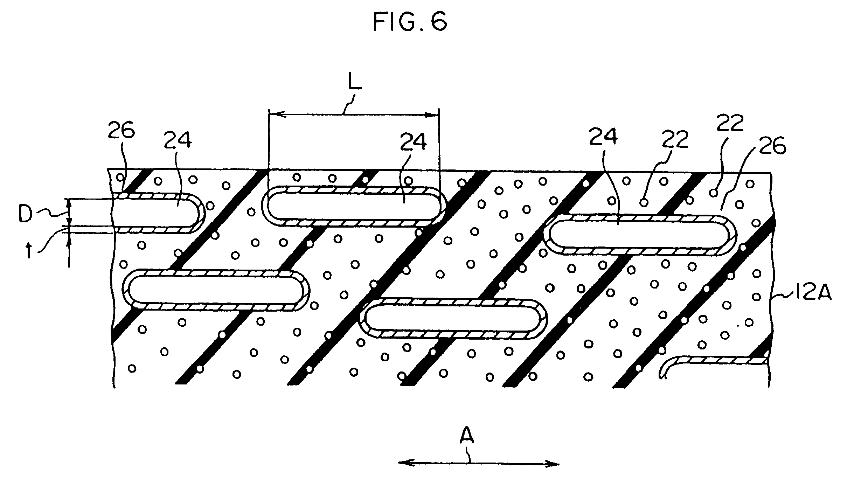

As shown in Fig. 6, the outer rubber layer 12A is formed of foamed rubber including a large number of substantially spherical closed cells 22 and a large number of elongated closed cells 24 each reinforced entirely by a protective layer 26 made of resin.

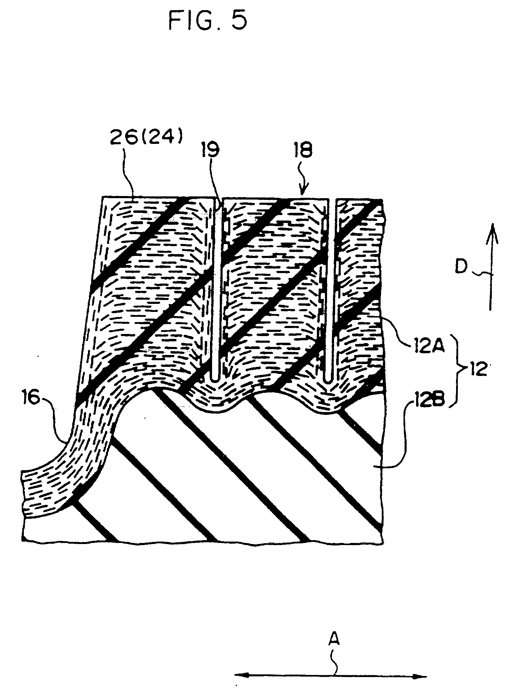

In the outer rubber layer 12A, the elongated closed cells 24 reinforced by the protective layer 26 are oriented substantially in the circumferential direction of the tire (i.e., the directions indicated by double-headed arrow A in Fig 5).

A description will be hereinafter given of a method for manufacturing the outer rubber layer 12A of the pneumatic tire 10 according to the present embodiment.

As the rubber component used for the rubber composition which forms the outer rubber layer 12A, one having a glass transition temperature of -60°C or less is preferably used. This glass transition temperature allows the outer rubber layer 12A of the tread 12 to maintain sufficient rubber elasticity in a low-temperature range so that a satisfactory tire performance on ice can be obtained.

Further, the rubber composition for forming the outer rubber layer 12A preferably includes at least one kind of rubber selected from a group consisting of natural rubber and diene-based synthetic rubber.

Diene-based synthetic rubbers include styrenebutadiene copolymer, cis-1,4-polyisoprene, cis-1,4-polybutadiene, and the like.

Among these, cis-1,4-polybutadiene is preferably used in respect of its low glass transition temperature and a large effect by improvement of a tire performance on ice, and polybutadiene having a cis percentage content of 90% or more is particularly preferable.

In order that cells are formed in the outer rubber layer 12A, a foaming agent and foaming auxiliaries are contained in the rubber composition.

Examples of the foaming agent include dinitrosopentamethylene tetraamine (DPT), azodicarbonamido (ADCA), dinitrosopentastyrenetetramine and benzenesuphonylhydrazide derivatives, oxybisbenzenesulphonylhydrazide (OBSH), and the like. Among these, azodicarbonamido (ADCA) is preferable in view of its manufacturing properties.

As the foaming auxiliaries, there are preferably applied urea, zinc stearate, zinc benzenesulfinic acid, zinc white, and the like, which are usually used for manufacturing foamed products.

The foaming agent and the foaming auxiliaries each may contain components other than the aforementioned.

Further, the rubber composition includes, in addition to the above-described rubber components, carbon black, silica, a silane coupling agent, process oil, a vulcanizing agent, a vulcanization accelerator, and the like. Moreover, additives such as an antioxidant, zinc oxide, stearic acid, and an antiozonant, which are in ordinary use in the rubber industry, are also included.

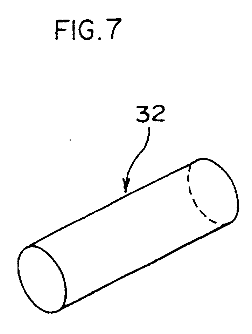

In the refining process (kneading process) of the above-described rubber composition, elongated resins 32 as shown in Fig. 7 are kneaded so as to be uniformly dispersed.

Here, the resin 32 used in the present embodiment is a thermoplastic resin whose viscosity is lower than that of the rubber matrix in the tire vulcanization process.

Generally, the viscosity prior to melting of a resin phase is much higher than the viscosity after crosslinking (Max value) of the rubber matrix. However, once the resin phase is molten, the viscosity thereof decreases sharply. From the beginning to the end of the tire vulcanization process, the viscosity of the rubber matrix increases due to the crosslinking reaction. During this process, the elongated resin phase is molten and the viscosity of the resin phase which has become sharply higher thereby decreases inversely to the viscosity of the rubber matrix (under crosslinking) in a relative manner.

The "rubber matrix" mentioned herein indicates the rubber portion not including the resin 32.

An important condition in order to obtain the elongated closed cells 24 which are entirely reinforced by the protective layer 26 is that, when the resin 32 contained in the rubber is a crystalline polymer, the melting point of the crystalline polymer is set to be lower than or equal to the maximum vulcanizing temperature.

The elongated closed cells 24 reinforced by the protective layer 26 are formed by utilizing a state where the resin 32 is made molten due to the heat generated by the vulcanization so that the viscosity thereof becomes lower than that of the rubber matrix, and gas generated from a foaming agent included in advance in the rubber is diffused or dissolved in the rubber and moves to concentrate in the inner side of the molten resin 32 which has the lowest viscosity in all the rubber.

Accordingly, it is important that, when the resin 32 is a crystalline polymer, the melting point thereof be set at the maximum vulcanizing temperature of the tread portion or less. Moreover, the maximum vulcanizing temperature of the tread portion" mentioned herein indicates the maximum temperature of the tread portion during the period in which a tire is inserted into a mold, is taken out from the mold, and is cooled.

The rubber viscosity is in the range from 30 to 100 at Mooney viscosity.

The melting viscosity of the resin 32 depends on the melting point (in the case of crystalline polymer) and the molecular weight.

It is preferable that the melting point of the resin 32 is lower than the maximum vulcanizing temperature of a rubber to be used. The reason is that, the lower the melting point of the resin 32 is in comparison with the maximum vulcanizing temperature of the rubber, the earlier in the vulcanization process the resin 32 becomes molten, thereby allowing gas generated in the rubber to easily penetrate into the resin 32.

When the melting point of the resin 32 is too close to the maximum vulcanizing temperature of the rubber, the resin 32 is still molten in the last stage of the vulcanization process. At this point in time, the rubber matrix is already subjected to crosslinking with gas being taken therein, and therefore, it is difficult for the gas to penetrate into the molten resin 32 and for the elongated closed cell 24 to thereby be formed.

On the other hand, when the melting point of the resin 32 is excessively low, the resin 32 is molten by the heat given off during the kneading of the rubber and the viscosity of the resin 32 decreases. For this reason, the resins 32 are fused to each other in the kneading stage thereby causing a deterioration of the dispersibility of the resins 32 in the rubber, which is not preferable. Further, when the melting point of the resin 32 is excessively low, the elongated forms of the resin 32 cannot be maintained in the kneading stage and the resin 32 is divided into a plurality of sections, or alternatively, the resin 32 is microdispersed when it is molten into the rubber.

Accordingly, the melting point of the resin 32 needs to be within the range of the above-described concepts and also needs to be set at a temperature which is lower than the maximum vulcanizing temperature of the rubber by 10°C or more, preferably by 20°C or more, and more preferably by 30°C or more.

Incidentally, the vulcanizing temperature of rubber in industry is about 190°C at maximum, and therefore, when the maximum vulcanizing temperature is set at 190°C, the melting point of the resin 32 needs to be set at 190°C or less, preferably at 180°C or less, and more preferably at 170°C or less.

Further, in view of the rubber kneading process, the melting point of the resin 32 is preferably set to be higher than the maximum temperature at the time of kneading by 5°C or more, preferably by 10°C or more, and more preferably by 20°C or more. Assuming that the maximum temperature in the rubber kneading process is set at about 95°C, the melting point of the resin 32 is set at 100°C or more, preferably 105°C or more, and more preferably 115°C or more.

As is commonly known, even when the resin 32 is formed of the same material, the higher the molecular weight becomes, the higher the melting viscosity at a fixed temperature becomes. Accordingly, in order to obtain the elongated closed cells 24, the molecular weight needs to be in such a range that the viscosity of the resin 32 is set so as not to become higher than the flow viscosity of the rubber at the maximum vulcanizing temperature of the tread rubber.

As the result of tests, in the case of a rubber composition into which elongated polyethylene having a weight average molecular weight of 1 to $2 \times 10^5$ or thereabouts is mixed, the elongated closed cells 24 were formed by vulcanization. However, in the case of a rubber composition into which ultra high molecular weight polyethylene having a weight average molecular weight of $7 \times 10^5$ or more, gas generated within the rubber does not concentrate in the interior of the polyethylene and the elongated polyethylene was not made hollow. It is considered that the foregoing results were caused by the difference of the melting viscosities arising from the difference in molecular weights.

On the other hand, when the molecular weight is excessively low, the viscosity of the resin 32 deteriorates in the rubber kneading stage and the resins 32 are fused to each other causing a deterioration in the dispersibility of the resin in the rubber, which is not preferable.

The molecular weight of the resin 32 used in the present embodiment depends on the chemical composition of the material and the branching state of the molecular chain, and therefore, it is not limited to the aforementioned. However, the molecular weight of the resin 32 needs to be selected in a suitable range in accordance with the selected material.

Meanwhile, the above-described melting point indicates a melting peak temperature measured using a 910-type DSC measuring device manufactured by Du Pont (U.S.A.) under the conditions of a temperature rising rate of 10°C/min. and of a sample weight of 5mg.

In the foregoing, a description was given of the thermal properties of the resin 32 required by the present embodiment, however, the present embodiment is not limited to a crystalline polymer having a melting point. So long as the elongated closed cells 24 with the protective layer 26 formed from the resin 32 formed in an outer peripheral portion thereof can be obtained, the resin 32 may be a noncrystalline polymer.

Even if the resin 32 is a noncrystalline polymer, it is an important condition that, in the vulcanization process, the viscosity of the resin 32 becomes lower than that of the rubber until the temperature of the tread rubber reaches the maximum vulcanizing temperature and no fusing of the resins 32 at the rubber kneading temperature occurs thereby giving excellent dispersiblity. The material and molecular weight of the resin 32 are selected to satisfy the above requirements.

Specific examples of a crystalline polymer resin 32 include polyethylene (PE, melting point: 135°C), polypropylene (PP, melting point: 167°C), polybutylene (melting point: 129°C), polybutylene succinate (melting point: 115°C), polyethylene succinate (melting point: 105°C), a single-composition polymer such as syndiotactic-1,2-polybutadiene (SPB, melting point: 130°C), and a material whose melting point is set in the suitable range by copolymerization, blending, or the like. Further, an additive may also be applied to each of these resin materials.

Specific examples of a noncrystalline polymer resin 32 include polymethyl methacrylate, acrylonitrile-butadiene-styrene (ABS), polystyrene, and the like.

So long as the resin 32 satisfies the above-described requirements, materials other than the above-described examples may also be used as the resin 32. Further, the resin 32 to be dispersed is not limited to one type and a plurality of types of resin 32 may also dispersed.

For example, when the maximum vulcanizing temperature of the pneumatic tire 10 is 175°C, polyethylene (melting point: 135°C) can be used as the resin 32. Further, polyethylene (melting point : 135°C) and polypropylene (melting point: 167°C) may both be dispersed.

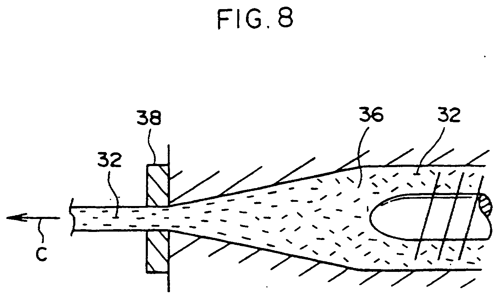

As shown in Fig. 8, when a raw rubber composition 36 containing the kneaded elongated resins 32 is extruded from a nozzle 38 of an extruder having a passage whose cross-sectional area decreases toward the exit, the orientation of the resins 32, i.e., the longitudinal directions of the resins 32 are gradually made uniform along the direction of extrusion (i.e., the direction indicated by arrow C in Fig. 8). When the resins 32 come out from the nozzle 38, the longitudinal directions of the resins 32 are made uniform in the direction of extrusion, and thereafter, the belt-shaped rubber composition 36 extruded from the nozzle 38 is cut to a desired length and the cut rubber composition 36 can be used as the rubber material of the outer rubber layer 12A.

The extent to which the longitudinal directions of the resins 32 are aligned varies depending on the rate at which the passage cross-sectional area decreases, the extrusion rate, the viscosity of the rubber, and the like.

In order that the elongated resins 32 be arranged in a desired direction, i.e., the extruding direction, it is important to control the fluidity of the rubber within a limited temperature range. In other words, by suitably applying a workability improving agent such as oil and liquid polymer to the rubber composition so as to decrease the viscosity of the rubber matrix and thereby improve the fluidity of rubber, the resins 32 can be extruded extremely favorably, even under the constraint of maintaining an extrusion temperature which is the melting point of the elongated resins 32 or less, and the elongated resins 32 can be ideally aligned along the direction of extrusion.

In such a manner that the outer rubber layer 12A in the state of a belt-shaped raw rubber formed from the rubber composition thus obtained is applied onto the inner rubber layer 12B of raw rubber applied in advance to the crown of a green tire case and vulcanization molding is effected therefor in a predetermined mold, at a predetermined temperature, and at a predetermined pressure, the pneumatic tire 10 of the present embodiment can be formed.

In order that the elongated closed cells 24 provided at the inner side of the transverse direction of the tire are oriented in the circumferential direction of the tire and the elongated closed cells 24 provided at an outer side of the transverse direction of the tire are oriented in the transverse direction of the tire, the above-described raw rubber composition is applied to the inner side of the transverse direction of the tire so that the elongated resins 32 are oriented in the circumferential direction of the tire, and the above-described raw rubber composition is applied to the outer side of the transverse direction of the tire so that the elongated resins 32 are oriented in the transverse direction of the tire.

When the raw outer rubber layer 12A is heated in the mold, as shown in Fig. 9A, generation of gas 34 is begun by a foaming agent.

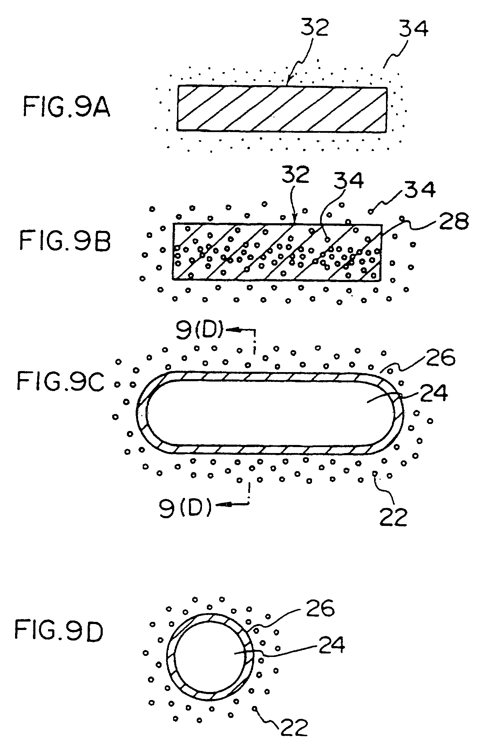

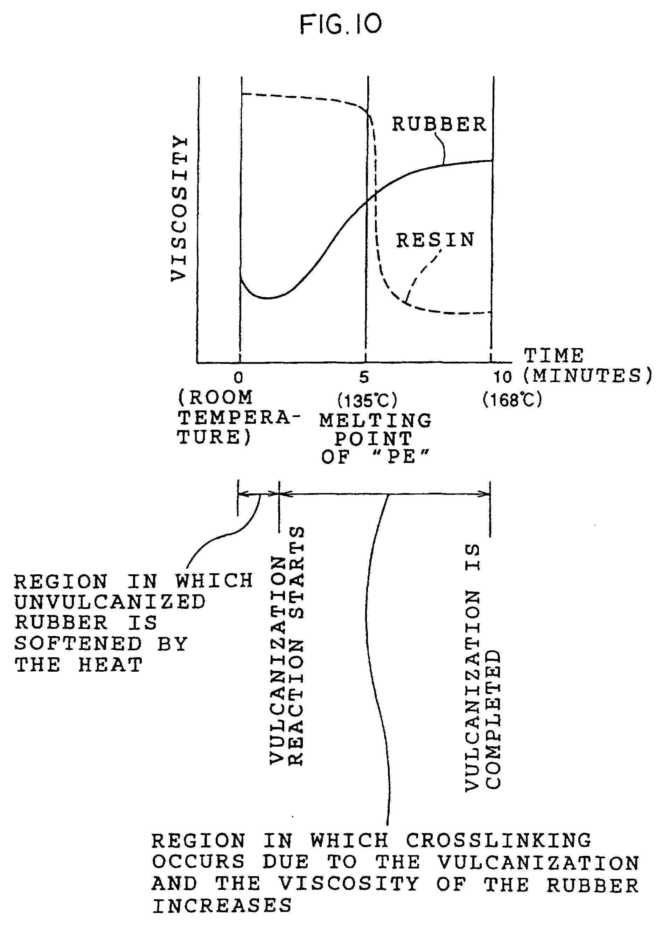

When the raw outer rubber layer 12A is heated to allow melting (or softening) of the resin 32 and the viscosity of the resin 32 becomes lower than that of the rubber matrix (see Fig. 10), as shown in Fig. 9B, the gas 34 generated around the resins 32 moves into the molten resins 32. Finally, air bubbles of the gas 34 moving into the molten resins 32 connect together to form an elongated space and gas generated in a position separated from the resins 32 stays therein.

The outer rubber layer 12A after having been cooled becomes a foamed rubber in which spherical closed cells 22 and elongated closed cells 24 which are each reinforced by the protective layer 26 of the resin 32, whose outer peripheral portion is solidified, are formed (see Figs. 9C and 9D).

A description will be hereinafter given of the operation of the present embodiment.

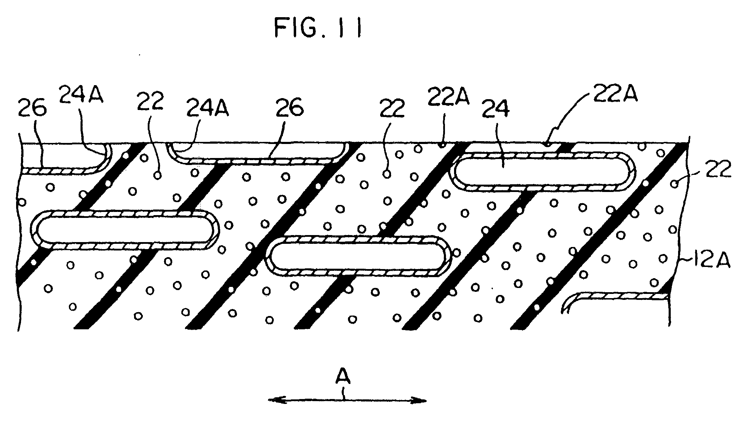

When the pneumatic tire 10 according to the present embodiment is subjected to a running test, as shown in Fig. 11, concave portions 22A formed by substantially spherical closed cells 22 and groove-shaped concave portions 24A formed by elongated closed cells 24 appear on the road contacting surface of the tread 12.

When the pneumatic tire 10 is subjected to a running test on ice, a water film is generated between the tire and the ice surface due to contact pressure and frictional heat. However, a large number of concave portions 22A and 24A formed on the road contacting surface of the tread 12 allow quick discharge and removal of water (water film) on the road contacting surface. Further, the groove-shaped concave portions 24A appearing on the road contacting surface serve as water discharge passages to remove water on the road contacting surface more efficiently than the spherical closed cells 22.

Since the groove-shaped concave portions 24A are formed in such a manner that the outer peripheral portion thereof is reinforced by the protective layer 26 which is harder than the rubber matrix, the concave portion 24A is not apt to deform even under the application of a heavy load and can constantly maintain high water discharge and removal properties without being affected by a variation of load.

In addition, the pneumatic tire 10 of the present embodiment allows further improvement of the frictional force between the tire and the road surface based on the protective layer 26 exposed to the road contact surface acting to scratch the road surface.

According to the method for manufacturing the pneumatic tire 10 provided by the present embodiment, the elongated resin 32 can be made hollow even under the conditions of a high temperature and high pressure during vulcanization molding and elongated closed cells 24 reinforced by the protective layer 26 which can obtain sufficient water discharge and removal properties can be reliably formed.

Here, in the foamed rubber portion which forms the outer rubber layer 12A, a total expansion ratio Vs comprising the expansion ratio Vs1 of the spherical closed cells 22 and the expansion ratio Vs2 of the elongated closed cells 24 combined is desirably set in the range from 3 to 40%, and preferably 5 to 35%. The total expansion ratio Vs of the foamed rubber is represented by the following expression: $Vs = (\rho_0/\rho_1-1) \times 100(\%)$, wherein $\rho_1$ indicates the density of the foamed rubber (g/cm$^3$) and $\rho_0$ indicates the density of the solid phase portion of the foamed rubber (g/cm$^3$).

When the total expansion ratio Vs is less than 3%, sufficient water discharge and removal cannot be achieved due to an overall insufficiency of volume of concave portions against the water film generated and an improvement of the tire performance on ice cannot be expected.

When the total expansion ratio Vs exceeds 40%, a sufficient improvement in the tire performance on ice can be obtained. However, since there exist too many cavities within the rubber, the endurance limit of the compound decreases sharply, which is not preferable in view of durability.

With the total expansion ratio Vs being set in the range from 3 to 40%, it is important that the elongated closed cells 24 amount to 10% or more of the total expansion ratio Vs. When less than 10%, the number of appropriate elongated water passages is few and the effects when only the spherical closed cells are formed is reduced.

The average diameter of the elongated resin 32 is actually 2.3 to 400 μm. The reason is that, in the general manufacturing conditions of tire vulcanization, the average diameter of the resin 32 at a stage prior to the elongated closed cells 24 being made hollow is set in the range from about 2.3 to 400 μm so that the hollow diameter of the desired elongated closed cells 24 in a completed state is from 20 to 500 μm.

The average hollow diameter D (i.e., the inner diameter of the protective layer 26 ; see Fig. 6) of the elongated closed cells 24 is preferably set in the range from 20 to 500 μm.

When the average hollow diameter D of the elongated closed cells 24 is less than 20 μm, water discharge and removal properties deteriorate, which is not preferable. On the other hand, when the average hollow diameter D of the elongated closed cells 24 exceeds 500 μm, cut resistance deteriorates, breakage of blocks occurs, and further, wear resistance on a dry road surface also deteriorates, which is not preferable.

The ratio between the maximum length L of each elongated closed cell 24 and the average hollow diameter D, i.e., L/D is preferably 3 or more.

When the ratio L/D is set at 3 or more, the groove-shaped concave portions 24A appearing on a worn rubber surface become longer and are formed with a large capacity with the average hollow diameter D being set in the above-described optimum range, thereby allowing discharge and removal of a large quantity of water. Particularly, the groove-shaped concave portions 24A whose ends are connected to the circumferential grooves 14, the transverse grooves 16, the sipes 19, or the like allow absorbed water to be discharged in the circumferential grooves 14, the transverse grooves 16, and the sipes 19.

In the above-described pneumatic tire 10, the elongated closed cells 24 are oriented in such a manner that the longitudinal direction thereof coincides with the circumferential direction of the tire. However, some of the elongated closed cells 24 may be oriented along directions other than the above-described direction for reasons of manufacturing.

The above-described pneumatic tires 10 are each used for so-called passenger cars, but the present invention can also be applied to tires other than the tires for a passenger car, for example, to tires for a truck, a bus, or the like.

Further, in the above-described embodiment, although the vulcanizing temperature is set at 175°C, the vulcanizing temperature may be suitably varied depending on the rubber material, the kind of tire, and the like.

In order to prevent collapse of the elongated closed cells 24, it is important to provide adhesiveness between the protective layer 26 and its peripheral matrix rubber. The polyethylene or the like used by the embodiment of the present invention has been molten and thus adheres to the rubber to a certain extent. However, in order to further improve the adhesiveness between the protective layer 26 and the matrix rubber, there exist, for example, a method in which the resin 32 is subjected to surface treatment, a method for including, in the resin 32, a component which improves adhesiveness to rubber, and the like.

In the above-described embodiment, the elongated resins 32 are kneaded together with a rubber material and the like without being molten, the kneaded resins 32 are extruded from the nozzle of an extruder, whose cross-sectional area decreases toward the nozzle, and a rubber composition including the elongated resins 32 arranged in such a manner that the longitudinal direction thereof coincides with the extruding direction is thereby prepared. However, a similar rubber composition can be prepared by using other method as well.

For example, when granular resins are kneaded together with rubber materials and the like and are extruded from the nozzle of the extruder in such a state that the temperature thereof during extrusion is set to allow melting or softening of the resins, the rubber composition is extruded while the molten or softened resins are being gradually elongated in the extruding direction. When the rubber composition is extruded from the nozzle, the resins are formed to be elongated so that the longitudinal direction thereof coincides with the extruding direction.

In order to verify the effects of the present invention, tires in accordance with comparative examples 1 and 2 and a tire in accordance with embodiment 1 were prepared and vehicle tests for feeling on snow, braking performance on ice, traction performance on ice, and feeling on ice were conducted for each of the above tires and the results were compared with one another.

A description will be hereinafter given of the tires in accordance with comparative examples 1, 2 and embodiment 1.

The size of each of these tires is 185/70R14.

The tire in accordance with embodiment 1 has the structure described in the above-described embodiment (see Figs. 1 to 6). The tire in accordance with comparative example 1 has the same pattern as that of the tire of embodiment 1, except that the tread rubber has no elongated closed cells 24 and has only spherical closed cells. The tire in accordance with comparative example 2 is formed so that the tread rubber has no elongated closed cells 24 and has spherical closed cells and short fibers of polyester.

Next, other specifications and the test method of each of the tires will be described.

Volume ratio of spherical closed cells to elongated closed cells:

A block piece is cut out from the tire tread and the surface to be observed is cut open by a sharp-edged razor along a direction perpendicular to the circumferential direction of the tire and also along a direction perpendicular to the tread surface. The cut sample was photographed at a magnification of 100 using a scanning electron microscope. The portion to be photographed was set by random sampling. Next, in the photograph of the cut sample, a portion of the spherical closed cells and a portion of the elongated closed cells each having a resin protective layer are separated from each other, respective areas of the two portions of closed cells are measured, and the area ratio between the spherical closed cells and the elongated closed cells in a fixed area is calculated. The above-described measurement is made ten times and an average area ratio is obtained and set as the volume ratio of the spherical closed cells to the elongated closed cells.

Hardness:

The vulcanized rubber composition was measured at 0°C according to JIS K6301.

Average inner diameter of the elongated closed cells:

The total area of the elongated closed cells measured in the foregoing is divided by the number of the observed elongated closed cells, and an average cross-sectional area for each closed cell is thereby obtained. The diameter of the elongated closed cell, assuming that the cross section is completely circular, is calculated by the following formula.

$$\text{Inner diameter of elongated closed cell =}$$

$$(\text{cross-sectional area for each closed cell} \div \pi)^{0.5} \times 2$$

The above-described measurement is conducted ten times and the average value thereof is determined as the average inner diameter of the elongated closed cells.

L/D:

The ratio, L/D, is the value obtained by dividing the length of short fibers by the inner diameter given by the above measurement. The length of the elongated closed cells may be actually measured by cutting samples for each closed cell, but many errors occur in this measurement. Accordingly, the above-described definition is employed.

Thickness of the resin layer which forms the elongated closed cells:

The cut sample used in the above-described measurement is used and photographed with a scanning electron microscope set at a high magnification which allows measurement of the thickness of the resin, and the thickness is measured at each of four locations on each elongated closed cell. This measurement is conducted for each of 40 elongated closed cells and the average value thereof is set as the thickness of the protective layer of the elongated closed cells.

An on-vehicle test was conducted in such a manner that the tire to be tested, having an internal pressure of 200kPa, was mounted on a 1600cc-type car made in Japan (carrying two passengers). Each test method will be hereinafter described.

Tire performance on snow:

An overall feeling evaluation of braking performance, acceleration performance, straight line stability, cornering performance, and a climbing performance on a snow covered test course road was carried out (feeling evaluation made by the test driver). The results are shown as index numbers in which the results of the tire of comparative example 1 are taken as 100, and the greater the numerical value is, the better the performance on snow is.

Braking performance on ice:

The stopping distance when the vehicle running at a speed of 20km/h on an icy surface was fully braked was measured. The inverse number of the stopping distance is shown as an index number in which that of the tire of comparative example 1 is presumed to be 100, and the greater the numerical value is, the better the braking performance on ice is.

Traction performance on ice:

The acceleration time from a standing start to cover a distance of 20m on an icy surface was measured. The inverse number of the acceleration time is shown as an index number in which that of the tire of comparative example 1 is presumed to be 100, and the greater the numerical value is, the better the traction performance is.

Feeling on ice:

An overall feeling evaluation of braking performance, acceleration performance, straight line stability, and cornering performance on an ice covered test course road (feeling evaluation made by the test driver). The results are shown as an index number in which the tire of comparative example 1 is taken as 100, and the greater the numerical value is, the better the feeling on ice is.

Specifications and test results of each tire are shown in Table 1 listed below.

TABLE 1

| | | Comparative Example Tire 1 | Comparative Example Tire 2 | Embodiment |
|---|---|---|---|---|
| blending of rubber composition (parts by weight) | natural rubber | 50 | ← | ← |
| | cis-1,4-polybutadiene rubber | 50 | ← | ← |
| | carbon black | 30 | ← | ← |
| | other fillers | silica 30 | ← | ← |
| | silane coupling agent | 3.0 | ← | ← |
| | aroma oil | 10 | ← | ← |
| | stearic acid | 2.0 | ← | ← |
| | antioxidant | 2.5 | ← | ← |
| | zinc white | 2.0 | ← | ← |
| | vulcanization accelerator | 1.0 | ← | ← |
| | sulfur | 1.0 | ← | ← |
| | foaming agent | 3.0 | ← | ← |
| | foaming accelerator | urea-based 3.0 | ← | ← |
| | resin (short fiber) | ------- | 6.0 | 2.0 |

TABLE 1   (continued)

|  |  | Comparative Example Tire 1 | Comparative Example Tire 2 | Embodiment |
|---|---|---|---|---|
| Outer rubber layer | total expansion ratio (%) | 26 | 26 | 26 |
|  | volume ratio between 1st and 2nd closed cells | —--- | —--- | 55:45 |
|  | hardness (degree) | 48 | 50 | 49 |
|  | 1st closed cell<br>average hollow diameter( μm) | 100 | 100 | 120 |
|  | 2nd closed cell<br>average hollow diameter(μm) | ----- | ----- | 190 |
|  | L/D | ----- | ----- | 18 |
|  | thickness t of protective layer (μm) | ----- | ----- | 2.9 |
|  | resin<br>type | ----- | polyester | thermoplastic resin |
|  | diameter(μm) | ----- | 50 | 22 |
|  | length(mm) | ----- | 2.0 | 2.0 |
|  | melting point (°C) | ----- | 255°C | 135°C |
| feeling on snow | | 100 | 100 | 100 |
| braking performance on ice | | 100 | 110 | 120 |
| traction performance on ice | | 100 | 110 | 120 |
| feeling on ice surface | | 100 | 110 | 120 |

Meanwhile, in Table 1 listed above, the first closed cell and the second closed cell in the vulcanized rubber composition indicate the spherical closed cell and the elongated closed cell, respectively, which are described in the above-described embodiment of the present invention.

cis-1,4-polybutadiene: BR01 manufactured by JSR
carbon black: Asahi Carbon N110
silica: Nipsl AQ manufactured by NIPPON SILICA INDUSTRIAL CO., LTD.
silane coupling agent: Si69 manufactured by DEGUSSA
antioxidant: N-(1,3-dimethylbutyl)-N-phenyl-P-phenylendiamine
vulcanization accelerator: N-cyclohexyl-2-benzothiazyl-1-sulfenamide
foaming agent DPT: Cellular D manufactured by EIWA CHEMICAL INDUSTRIAL CO., LTD.
foaming accelerator (urea-based): Cellupaste K5 manufactured by EIWA CHEMICAL INDUSTRIAL CO., LTD.
thermoplastic resin: PE (polyethylene)

From the test results shown in the above table 1, it is apparent that the tire in accordance with embodiment 1 to which the present invention is applied has a more improved braking performance on ice, traction performance on ice, and feeling on ice than the tires of comparative examples 1 and 2.
As described above, the pneumatic tire of the present invention, having the above-described structure, has an excellent effect that water removal capabilities can be efficiently exhibited without being affected by the running conditions or the state of wear of the tire, and the tire performance on snow and ice can be improved greatly.

**Claims**

1. A pneumatic tire (10) in which a plurality of grooves (14,16) defining a plurality of land portions (15,18) are formed in a tread road-contacting surface, and a plurality of sipes (19) extending inward in the radial direction of the tire are formed in the land portions,
   wherein a total negative ratio N of the road-contacting surface is set in a range from 25% to 65%, a depth D of each of the grooves (14,16) is set at 5mm or more, a depth Sd of each of the sipes (19) is given by D x $\alpha$ (0.1 < $\alpha$ < 1.0), and a tread rubber (12) includes a large number of elongated closed cells (24) each covered by a protective layer (26) made from resin; and
   wherein the traction edge component density E of the road contacting surface of the land portion of the tread is in a range of 0.1 to 0.3.

2. A pneumatic tire as claimed in claim 1, **characterized in that** the elongated closed cells (24) are each oriented in the circumferential direction of the tire.

3. A pneumatic tire as claimed in claim 1or 2, **characterized in that** the total expansion ratio of the closed cells (22,24) is set in a range from 3% to 40% and the expansion ratio of the elongated closed cells (24) amounts to 10% or more of the total expansion ratio.

4. A pneumatic tire as claimed in any of claims 1 to 3, **characterized in that** the ratio of the maximum length L of each of the elongated closed cells (24) to the average hollow diameter D, namely L/D, is 3 or more.

5. A pneumatic tire as claimed in any of claims 1 to 4, **characterized in that** the resin is a thermoplastic resin.

6. A pneumatic tire as claimed in any of claims 1 to 4, **characterized in that** the resin has a viscosity lower than that of a rubber matrix in a tire vulcanization process.

7. A pneumatic tire as claimed in any of claims 1 to 4, **characterized in that** when the resin is a crystalline polymer, the melting point thereof is set at the maximum vulcanizing temperature of the tread rubber or less.

8. A pneumatic tire as claimed in any of claims 1 to 4, **characterized in that** the resin is polyethylene.

9. A pneumatic tire as claimed in claim 1, **characterized in that** a plurality of grooves (14,16) defining a plurality of land portions (15,18) are formed in a tread road-contacting surface, and a plurality of sipes (19) extending inward in the radial direction of the tire and also in the transverse direction of the tire are formed in the land portions,
   wherein a total negative ratio N of the road-contacting surface is set in a range from 25% to 65%;a depth D of each of the grooves (14,16) is set at 5mm or more, a depth Sd of each of the sipes (19) is given by D x $\alpha$ (0.1 < $\alpha$ < 1.0), and a tread rubber (12) includes a large number of elongated closed cells (24) which are each oriented in the circumferential direction of the tire and covered by a protective layer (26) made from resin;
   the tread rubber has a total expansion ratio of 3% to 40% ;
   the expansion ratio of the elongated closed cells (24) amounts to 10% or more of the total expansion ratio;
   the ratio of the maximum length L of each of the elongated closed cells (24) to the average hollow diameter D, namely L/D, is 3 or more;
   the resin is a thermoplastic resin having a viscosity lower than that of a rubber matrix in a tire vulcanization process; and
   wherein the traction edge component density E of the road contacting surface of the land portion of the tread is in a range of 0.1 to 0.3.

**Patentansprüche**

1. Luftreifen (10), bei welchem mehrere Rillen (14, 16), die mehrere Stegabschnitte (15, 18) festlegen, in einer Laufflächen-Straßenberührungsoberfläche vorgesehen sind, und mehrere Lamellen (19), die sich nach einwärts in Radialrichtung des Reifens erstrecken, in den Stegabschnitten vorgesehen sind;
   wobei ein gesamtes, negatives Verhältnis N der Straßenberührungsoberfläche auf einen Bereich von 25 % bis 65 % eingestellt ist, die Tiefe jeder der Nuten (14, 16) auf 5 mm oder mehr eingestellt ist, die Tiefe Sd jeder der Lamellen (19) gegeben ist durch D $\times$ $\alpha$ (0,1 < $\alpha$ < 1,0), und ein Laufflächengummi (12) eine große Anzahl an länglichen, geschlossenen Zellen (24) aufweist, der durch eine aus Harz bestehende Schutzschicht (26) abgedeckt ist; und

wobei die Traktionsrandkomponentendichte E der Straßenberührungsoberfläche des Stegabschnitts der Lauffläche im Bereich von 0,1 bis 0,3 liegt.

2. Luftreifen nach Anspruch 1, **dadurch gekennzeichnet, dass** die länglichen, geschlossenen Zellen (24) jeweils in Umfangsrichtung des Reifens ausgerichtet sind.

3. Luftreifen nach Anspruch 1 oder 2, **dadurch gekennzeichnet, dass** das gesamte Expansionsverhältnis der geschlossenen Zellen (22, 24) auf den Bereich von 3 % bis 40 % eingestellt ist, und das Expansionsverhältnis der länglichen, geschlossenen Zellen (24) 10 % oder mehr des gesamten Expansionsverhältnisses beträgt.

4. Luftreifen nach einem der Ansprüche 1 bis 3, **dadurch gekennzeichnet, dass** das Verhältnis der maximalen Länge L jeder der länglichen, geschlossenen Zellen (24) zum mittleren Hohlraumdurchmesser D, nämlich L/D, 3 oder mehr beträgt.

5. Luftreifen nach einem der Ansprüche 1 bis 4, **dadurch gekennzeichnet, dass** das Harz ein thermoplastisches Harz ist.

6. Luftreifen nach einem der Ansprüche 1 bis 4, **dadurch gekennzeichnet, dass** das Harz eine Viskosität aufweist, die niedriger ist als jene einer Gummimatrix in einem Reifenvulkanisiervorgang.

7. Luftreifen nach einem der Ansprüche 1 bis 4, **dadurch gekennzeichnet, dass** dann, wenn das Harz ein kristallines Polymer ist, dessen Schmelzpunkt auf die maximale Vulkanisiertemperatur des Laufflächengummis oder weniger eingestellt ist.

8. Luftreifen nach einem der Ansprüche 1 bis 4, **dadurch gekennzeichnet, dass** das Harz Polyethylen ist.

9. Luftreifen nach Anspruch 1, **dadurch gekennzeichnet, dass** mehrere Rillen (14, 16), die mehrere Stegabschnitte (15, 18) festlegen, in einer Laufflächen-Straßenberührungsoberfläche vorgesehen sind, und mehrere Lamellen (19), die sich nach innen in Radialrichtung des Reifens sowie in Querrichtung des Reifens erstrecken, in den Stegabschnitten vorgesehen sind;

wobei ein gesamtes, negatives Verhältnis N der Straßenberührungsoberfläche auf einen Bereich von 25 % bis 65 % eingestellt ist, eine Tiefe D jeder der Rillen (14, 16) auf 5 mm oder mehr eingestellt ist, eine Tiefe Sd jeder der Lamellen (19) gegeben ist durch D $\times$ $\alpha$ (0,1 < $\alpha$ < 1,0), und ein Laufflächengummi (12) eine große Anzahl an länglichen, geschlossenen Zellen (24) aufweist, die jeweils in der Umfangsrichtung des Reifens orientiert sind, und von einer Schutzschicht (26) abgedeckt sind, die aus Harz besteht;

das Laufflächengummi ein gesamtes Expansionsverhältnis von 3 % bis 40 % aufweist;

das Expansionsverhältnis der länglichen, geschlossenen Zellen (24) 10 % oder mehr des gesamten Expansionsverhältnisses beträgt;

das Verhältnis der maximalen Länge L jeder der länglichen, geschlossenen Zellen (24) zum mittleren Hohlraumdurchmesser D, nämlich L/D, 3 oder mehr beträgt;

das Harz ein thermoplastisches Harz ist, das eine Viskosität aufweist, die niedriger ist als jene einer Gummimatrix in einem Reifenvulkanisiervorgang; und

die Traktionsrandkomponentendichte E der Straßenberührungsoberfläche des Stegabschnitts der Lauffläche im Bereich von 0,1 bis 0,3 liegt.

**Revendications**

1. Pneumatique (10), dans lequel une pluralité de rainures (14,16) définissant une pluralité de parties formant portées (15,18) sont formées dans une surface de contact de la bande de roulement avec la chaussée, et une pluralité de fentes (19) qui s'étendent vers l'intérieur dans la direction radiale du pneumatique sont formées dans les parties formant portées;

dans lequel un rapport total négatif N de la surface en contact avec la chaussée est réglée dans une gamme de 25 % à 65 %, une profondeur D de chacune des rainures (14,16) est réglée égale à 5 mm ou plus, une profondeur Sd de chacune des fentes (15) est fournie par D x $\alpha$ (0,1 < $\alpha$ < 1,0), et un caoutchouc (12) de la bande de roulement inclut un nombre élevé de cellules fermées allongées (24) recouvertes chacune par une couche de protection (26) formée d'une résine; et

dans lequel la densité (E) du composant du bord de traction de la surface, qui est en contact avec la chaussée, de la partie formant portée de la bande de roulement se situe dans une gamme de 0,1 à 0,3.

2. Pneumatique selon la revendication 1, **caractérisé en ce que** les cellules fermées allongées (24) sont orientées chacune dans la direction circonférentielle du pneumatique.

3. Pneumatique selon la revendication 1 ou 2, **caractérisé en ce que** le taux d'expansion total des cellules fermées (22,24) est réglé dans une gamme de 3 % à 40 % et le taux d'expansion des cellules fermées allongées (24) est égal à 10 % ou plus du taux d'expansion total.

4. Pneumatique selon l'une quelconque des revendications 1 à 3, **caractérisé en ce que** le rapport de la longueur maximale L de chacune des cellules fermées allongées (24) au diamètre moyen de cavité D, à savoir L/D, est égal à 3 ou plus.

5. Pneumatique selon l'une quelconque des revendications 1 à 4, **caractérisé en ce que** la résine est une résine thermoplastique.

6. Pneumatique selon l'une quelconque des revendications 1 à 4, **caractérisé en ce que** la résine possède une viscosité inférieure à celle d'une matrice en caoutchouc dans un processus de vulcanisation du pneumatique.

7. Pneumatique selon l'une quelconque des revendications 1 à 4, **caractérisé en ce que** lorsque la résine est un polymère cristallin, le point de fusion de ce dernier est réglé à la température maximale de vulcanisation du caoutchouc de la bande de roulement ou moins.

8. Pneumatique selon l'une quelconque des revendications 1 à 4, **caractérisé en ce que** la résine est du polyéthylène.

9. Pneumatique selon la revendication 1, **caractérisé en ce qu'**une pluralité de rainures (14,16) définissant une pluralité de parties de portées (15,18) sont formées dans une surface de contact de la bande de roulement avec la chaussée, et une pluralité de fentes (19), qui s'étendent vers l'intérieur dans la direction radiale du pneumatique et également dans la direction transversale du pneumatique sont formées dans les parties formant portées;

dans lequel un rapport total négatif N de la surface en contact avec la chaussée est réglée dans une gamme de 25 % à 65 %, une profondeur D de chacune des rainures (14,16) est réglée égale à 5 mm ou plus, une profondeur Sd de chacune des fentes (15) est fournie par D x $\alpha$ (0,1 < $\alpha$ < 1,0), et un caoutchouc (12) de la bande de roulement inclut un nombre élevé de cellules fermées allongées (24) recouvertes chacune par une couche de protection (26) formée d'une résine;

le caoutchouc de la bande de roulement possède un taux d'expansion total compris entre 3 % et 40 %;

le taux d'expansion des cellules allongées fermées (24) intervient pour 10 % ou plus du taux d'expansion total;

le rapport de la longueur maximale L de chacune des cellules fermées allongées (24) au diamètre moyen de cavité D, à savoir L/D, est égal à 3 ou plus;

la résine est une résine thermoplastique possédant une viscosité inférieure à celle d'une matrice de caoutchouc dans un processus de vulcanisation; et

dans lequel la densité (E) du composant du bord de traction de la surface, en contact avec la chaussée, de la partie formant portée de la bande de roulement se situe dans une gamme de 0,1 à 0,3.

# FIG. 1

EP 0 882 606 B1

FIG. 2

# FIG. 3

EP 0 882 606 B1

# FIG.4

## FIG. 5

FIG.6

EP 0 882 606 B1

FIG.7

32

FIG. 8

FIG.9A

32 34

FIG.9B

32 34 34 28

FIG.9C

9(D) 26 24 9(D) 22

FIG.9D

26 24 22

## FIG.10

REGION IN WHICH
UNVULCANIZED
RUBBER IS
SOFTENED BY
THE HEAT

VULCANIZATION
REACTION STARTS

VULCANIZATION IS
COMPLETED

REGION IN WHICH CROSSLINKING
OCCURS DUE TO THE VULCANIZATION
AND THE VISCOSITY OF THE RUBBER
INCREASES

# FIG. I I

EP 0 882 606 B1